# EUROPÄISCHE PATENTANMELDUNG

(11) **EP 3 069 876 A1**
(43) Veröffentlichungstag der Anmeldung: **21.09.2016**
(21) Anmeldenummer: 15159438.9
(22) Anmeldetag: 17.03.2015
(51) Int. Cl.: B32B 27/08, B32B 27/34, C08G 69/00, C08L 77/00

(54) **Mehrschichtverbund mit einer Schicht aus einem teilaromatischen Polyamid**

(71) Anmelder: Evonik Degussa GmbH, 45128 Essen (DE)
(72) Erfinder: Nitsche, Jasmin, 44141Dortmund (DE); Gahlmann, Klaus, 45770 Marl (DE); Böer, Michael, 59399 Olfen (DE); Göring, Rainer, 46325 Borken (DE); Resing, Mario, 48703 Stadtlohn (DE)

(57) **Zusammenfassung**

Ein Mehrschichtverbund, der folgende Schichten enthält:
I. Eine erste Schicht (Schicht I) aus einer Formmasse, die zu mindestens 40 Gew.-% ein aliphatisches Polyamid enthält, sowie
II. eine zweite Schicht (Schicht II) aus einer Formmasse, die zu mindestens 60 Gew.-% folgende Komponenten enthält:
1) 60 bis 100 Gew.-Teile eines teilaromatischen Copolyamids, das aus Monomereinheiten besteht, die sich herleiten von
α) 30 bis 90 Mol-% einer Kombination von Hexamethylendiamin und Terepthalsäure sowie
β) 70 bis 10 Mol-% einer Kombination von Hexamethylendiamin und einer linearen aliphatischen Dicarbonsäure mit 8 bis 19 C-Atomen, und
2) 40 bis 0 Gew.-Teile eines olefinischen Copolymers als Schlagzähmodifier,
wobei die Summe der Gew.-Teile von 1) und 2) 100 ergibt,
weist eine hohe Wärmeformbeständigkeit, eine sehr gute Schlagfestigkeit, eine hohe Reißdehnung sowie eine gute Schichtenhaftung auf.

## Beschreibung

Gegenstand der Erfindung ist ein Mehrschichtverbund, der eine Sperrschicht aus einem teilaromatischen Polyamid sowie eine Schicht aus einer Formmasse auf Basis eines aliphatischen Polyamids enthält. Der Mehrschichtverbund ist in erster Linie ein Hohlkörper, etwa ein Hohlprofil oder ein Behälter zum Durchleiten oder Lagern flüssiger oder gasförmiger Medien.

Bei der Entwicklung von Mehrschichtverbunden, die zum Beispiel als Rohr zur Führung flüssiger oder gasförmiger Medien in Kraftfahrzeugen eingesetzt werden, wird neben der Forderung nach einer ausreichenden Kraftstoffbeständigkeit durch die Automobilindustrie eine verbesserte Sperrwirkung insbesondere der Kraftstoffleitungen verlangt, um die Emissionen von Kraftstoffkomponenten in der Umwelt zu reduzieren. Dies hat zur Entwicklung von Mehrschichtrohrsystemen geführt, bei denen beispielsweise Fluorpolymere, Ethylen-Vinylalkohol-Copolymere (EVOH) oder thermoplastische Polyester als Sperrschichtwerkstoff zum Einsatz kommen. Daneben sind aus der WO 2005/018891 auch Hohlkörper bekannt, die eine oder mehrere Schichten aus schlagzähmodifiziertem teilaromatischem Polyamid sowie optional eine oder mehrere Schichten aus aliphatischem Polyamid enthalten. Wegen des hohen Gehalts an Schlagzähmodifier (24 bzw. 25 Gew.-% in den Beispielen), der nötig ist, um eine ausreichend hohe Bruchdehnung zu erreichen, ist die Sperrwirkung gegenüber Kraftstoffkomponenten noch nicht zufriedenstellend. Die in den Beispielen der WO 2005/018891 gemessene Bruchdehnung erscheint durch die gewählten nicht praxisrelevanten Bedingungen (Messung an ausgestanzten Folien und bei sehr niedriger Abzugsgeschwindigkeit) recht hoch; diese Werte werden jedoch durch die Patentliteratur nicht bestätigt. Generell sind teilaromatische Polyamide wegen ihrer schlechten mechanischen Eigenschaften, insbesondere ihrer schlechten Schlagzähigkeit und geringen Bruchdehnung für derartige Anwendungen ungeeignet, auch wenn sie höhere Mengen an Schlagzähmodifier enthalten. In der EP-Patentanmeldung mit dem Aktenzeichen 14185373.9 vom 18.09.2014 werden Messungen an Formmassen aus einem PA6T/6I/66 beziehungsweise aus einem PA10T/TMDT mit jeweils 30 Gew.-% unterschiedlicher Schlagzähmodifier vorgestellt; die Bruchdehnung liegt bei 3 bis 6 %. Weiteren Aufschluss gibt die US 2014/0299220 A1; deren Vergleichsbeispiel 22 zeigt ein Rohr mit einer 800 µm dicken Schicht aus einem schlagzähmodifizierten PA6T/6I/66 und einer 200 µm dicken Schicht aus einem ETFE, wobei die Bruchdehnung 13 % beträgt. Im Vergleichsbeispiel 24 wird ein entsprechendes Rohr gezeigt, dessen Polyamidschicht aus einem schlagzähmodifizierten PA9T besteht, dessen Diaminanteil ein 50 : 50-Isomerengemisch aus 1,9-Nonandiamin und 2-Methyl-1,8-octandiamin ist; hier liegt die Bruchdehnung bei 22 %. Schließlich zeigt das Vergleichsbeispiel 27 ein entsprechendes Rohr, dessen Polyamidschicht aus einem schlagzähmodifizierten weiteren PA6T/6I/66 besteht; hier liegt die Bruchdehnung bei 18 %. Wünschenswert ist jedoch eine höhere Bruchdehnung des Rohrs, in manchen Anwendungen von mehr als 100 %.

Die Aufgabe der Erfindung besteht darin, einen Verbund mit einer Sperrschicht auf Basis eines teilaromatischen Polyamids zur Verfügung zu stellen, der eine ausgewogene Balance zwischen guter Sperrwirkung, hoher Schlagfestigkeit und hoher Reißdehnung aufweist und bei dem darüber hinaus eine gute Schichtenhaftung erhalten wird. Darüber hinaus sollte die Möglichkeit geschaffen werden, ein Innenschichtmaterial zu verwenden, bei dem nur eine sehr geringe Menge an Oligomeren ausgewaschen wird und somit keine Verstopfungen bei der Brennstoffzuführung zum Motor auftreten.

Diese Aufgabe wird durch einen Mehrschichtverbund gelöst, der folgende Schichten enthält:
I. Eine erste Schicht (Schicht I) aus einer Formmasse, die zu mindestens 40 Gew.-%, vorzugsweise zu mindestens 50 Gew.-%, besonders bevorzugt zu mindestens 60 Gew.%, insbesondere bevorzugt zu mindestens 70 Gew.-% und ganz besonders bevorzugt zu mindestens 80 Gew.-% ein aliphatisches Polyamid enthält, sowie
II. Eine zweite Schicht (Schicht II) aus einer Formmasse, die zu mindestens 60 Gew.-%, vorzugsweise zu mindestens 70 Gew.-%, besonders bevorzugt zu mindestens 75 Gew.%, insbesondere bevorzugt zu mindestens 80 Gew.-% und ganz besonders bevorzugt zu mindestens 85 Gew.-% eine Mischung folgender Komponenten enthält:
   1) 60 bis 100 Gew.-Teile, vorzugsweise 65 bis 100 Gew.-Teile, besonders bevorzugt 70 bis 99 Gew.-Teile, insbesondere bevorzugt 75 bis 98 Gew.-Teile und ganz besonders bevorzugt maximal 80 Gew.-Teile, maximal 85 Gew.-Teile, maximal 90 Gew.-Teile beziehungsweise maximal 95 Gew.-Teile eines teilaromatischen Copolyamids, das aus Monomereinheiten besteht, die sich herleiten von
      α) 30 bis 90 Mol-%, vorzugsweise 35 bis 85 Mol-%, besonders bevorzugt 40 bis 80 Mol-%, insbesondere bevorzugt 41 bis 75 Mol-% und ganz besonders bevorzugt 45 bis 70 Mol-% einer Kombination von Hexamethylendiamin und Terephthalsäure sowie
      β) 70 bis 10 Mol-%, vorzugsweise 65 bis 15 Mol-%, besonders bevorzugt 60 bis 20 Mol-%, insbesondere bevorzugt 59 bis 25 Mol-% und ganz besonders bevorzugt 55 bis 30 Mol-% einer Kombination von Hexamethylendiamin und einer linearen aliphatischen Dicarbonsäure mit 8 bis 19 C-Atomen,
         wobei sich die Mol-%-Angaben auf die Summe von α) und β) beziehen und wobei maximal 20 %, vorzugsweise maximal 15 %, besonders bevorzugt maximal 12 %, insbesondere bevorzugt maximal 8 % und ganz besonders bevorzugt maximal 5 % beziehungsweise maximal 4 % des Hexamethylendiamins durch die äquivalente Menge eines anderen Diamins ersetzt sein kann und/oder wobei maximal 20 %, vorzugsweise maximal 15 %, besonders bevorzugt maximal 12 %, insbesondere bevorzugt maximal 8 % und ganz besonders bevorzugt maximal 5 % beziehungsweise maximal 4 % der Terephthalsäure durch die äquivalente Menge einer anderen aromatischen Dicarbonsäure und/oder 1,4-Cyclohexandicarbonsäure ersetzt sein kann und/oder wobei maximal 20 %, vorzugsweise maximal 15 %, besonders bevorzugt maximal 12 %, insbesondere bevorzugt maximal 8 % und ganz besonders bevorzugt maximal 5 % beziehungsweise maximal 4 % der wiederkehrenden Einheiten aus Hexamethylendiamin und linearer aliphatischer Dicarbonsäure durch die äquivalente Menge von Einheiten ersetzt sein kann, die sich von einem Lactam beziehungsweise einer ω-Aminocarbonsäure mit 6 bis 12 C-Atomen herleiten,
   2) 40 bis 0 Gew.-Teile, vorzugsweise 35 bis 0 Gew.-Teile, besonders bevorzugt 30 bis 1 Gew.-Teile, insbesondere bevorzugt 25 bis 2 Gew.-Teile und ganz besonders bevorzugt maximal 20 Gew.-Teile, maximal 15 Gew.-Teile, maximal 10 Gew.-Teile beziehungsweise maximal 5 Gew.-Teile eines olefinischen Copolymers als Schlagzähmodifier,
wobei die Summe der Gew.-Teile von 1) und 2) 100 ergibt.

Das aliphatische Polyamid der Schicht I ist herstellbar aus einer Kombination von Diamin und Dicarbonsäure, aus einer ω-Aminocarbonsäure oder dem entsprechenden Lactam. Grundsätzlich kann jedes Polyamid verwendet werden, beispielsweise PA6 oder PA66. In einer bevorzugten Ausführungsform enthalten die Monomereinheiten des Polyamids im Mittel mindestens 8, mindestens 9 bzw. mindestens 10 C-Atome. Bei Gemischen von Lactamen wird hier das arithmetische Mittel betrachtet. Bei einer Kombination von Diamin und Dicarbonsäure muss das arithmetische Mittel der C-Atome von Diamin und Dicarbonsäure in dieser bevorzugten Ausführungsform mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA613, PA614, PA812, PA128, PA1010, PA10, PA814, PA148, PA1012, PA11, PA1014, PA1212 und PA12. Die Herstellung der Polyamide ist Stand der Technik. Selbstverständlich können auch hierauf basierende Copolyamide eingesetzt werden, wobei gegebenenfalls auch Monomere wie Caprolactam mit verwendet werden können.

Das Polyamid kann auch ein Polyetheramid sein. Polyetheramide sind prinzipiell z. B. aus der DE-OS 30 06 961 bekannt. Sie enthalten als Comonomer ein Polyetherdiamin. Geeignete Polyetherdiamine sind durch Konversion der entsprechenden Polyetherdiole durch reduktive Aminierung oder Kupplung an Acrylnitril mit nachfolgender Hydrierung zugänglich (z. B. EP-A-0 434 244; EP-A-0 296 852). Beim Polyetherdiamin kann die Polyethereinheit beispielsweise auf 1.2-Ethandiol, 1.2-Propandiol, 1.3-Propandiol, 1.4-Butandiol oder 1.3-Butandiol basieren. Die Polyethereinheit kann auch gemischt aufgebaut sein, etwa mit statistischer oder blockweiser Verteilung der von den Diolen herrührenden Einheiten. Das Gewichtsmittel der Molmasse der Polyetherdiamine liegt bei 200 bis 5000 g/mol und vorzugsweise bei 400 bis 3000 g/mol; ihr Anteil am Polyetheramid beträgt bevorzugt 4 bis 60 Gew.-% und besonders bevorzugt 10 bis 50 Gew.-%. Geeignete Polyetherdiamine sind durch Konversion der entsprechenden Polyetherdiole durch reduktive Aminierung oder Kupplung an Acrylnitril mit nachfolgender Hydrierung zugänglich; sie sind z. B. in Form der JEFFAMIN^{®} D- oder ED-Typen oder der ELASTAMINE^{®}-Typen bei der Huntsman Corp. oder in Form der Polyetheramin D-Reihe bei der BASF SE kommerziell erhältlich. In geringen Mengen kann auch ein Polyethertriamin mitverwendet werden, z. B. ein JEFFAMIN^{®}T-Typ, falls ein verzweigtes Polyetheramid eingesetzt werden soll. Vorzugsweise setzt man Polyetherdiamine ein, die pro Ethersauerstoff im Mittel mindestens 2,3 Kohlenstoffatome in der Kette enthalten.

Ebenso können auch Mischungen verschiedener Polyamide, ausreichende Verträglichkeit vorausgesetzt, verwendet werden. Verträgliche Polyamidkombinationen sind dem Fachmann bekannt; beispielsweise seien hier die Kombination PA12/PA1012, PA12/PA1212, PA612/PA12, PA613/PA12, PA1014/PA12 und PA610/PA12 sowie entsprechende Kombinationen mit PA11 aufgeführt. Im Zweifelsfall können verträgliche Kombinationen durch Routineversuche ermittelt werden.

In einer möglichen Ausführungsform wird eine Mischung aus 30 bis 99 Gew.-%, bevorzugt 40 bis 98 Gew.-% und besonders bevorzugt 50 bis 96 Gew.-% Polyamid im engeren Sinne sowie 1 bis 70 Gew.-%, bevorzugt 2 bis 60 Gew.-% und besonders bevorzugt 4 bis 50 Gew.-% Polyetheramid verwendet.

Neben aliphatischem Polyamid kann die Formmasse der Schicht I weitere Komponenten enthalten wie z.B. Schlagzähmodifikatoren, andere Thermoplaste, Weichmacher und andere übliche Zusatzstoffe. Beispiele hierfür sind Pigmente bzw. Füllstoffe wie Ruß, Titandioxid, Zinksulfid, Verstärkungsfasern wie z.B. Glasfasern, Verarbeitungshilfsmittel wie Wachse, Zinkstearat oder Calciumstearat, Antioxidantien, UV-Stabilisatoren sowie Zusätze, die dem Produkt antielektrostatische Eigenschaften verleihen wie z. B. Kohlenstofffasern, Graphitfibrillen, Fasern aus rostfreiem Stahl bzw. Leitfähigkeitsruß. Erforderlich ist nur, dass das Polyamid die Matrix der Formmasse bildet. Der Zusatz aller dieser weiteren Komponenten ist Stand der Technik.

Beim teilaromatischen Copolyamid der Schicht II kommen als lineare aliphatische Dicarbonsäure mit 8 bis 19 C-Atomen folgende in Frage: Octandisäure (Korksäure; C₈), Nonandisäure (Azelainsäure; C₉), Decandisäure (Sebacinsäure; C₁₀), Undecandisäure (C₁₁), Dodecandisäure (C₁₂), Tridecandisäure (C₁₃), Tetradecandisäure (C₁₄), Pentadecandisäure (C₁₅), Hexadecandisäure (C₁₆), Heptadecandisäure (C₁₇), Octadecandisäure (C₁₈) und Nonadecandisäure (C₁₉).

Anspruchsgemäß kann optional ein Teil des Hexamethylendiamins durch ein anderes Diamin ersetzt sein. Hier ist prinzipiell jedes Diamin geeignet; als Beispiel seien folgende Diamine genannt: 1,10-Decandiamin, 1,12-Dodecandiamin, m-Xylylendiamin, p-Xylylendiamin, Bis-(4-aminocyclohexyl)-methan, 2-Methyl-1,5-pentandiamin sowie 1,4-Bis-aminomethyl-cyclohexan. Selbstverständlich können auch Mischungen derartiger Diamine eingesetzt werden. Vorzugsweise wird jedoch neben Hexamethylendiamin kein weiteres Diamin eingesetzt.

Anspruchsgemäß kann optional auch ein Teil der Terephthalsäure durch eine andere aromatische Dicarbonsäure oder durch 1,4-Cyclohexandicarbonsäure ersetzt werden. Hier ist prinzipiell jede aromatische Dicarbonsäure geeignet; als Beispiel seien folgende Dicarbonsäuren genannt: Isophthalsäure, 4,4'-Diphenyldicarbonsäure, 4,4'-Diphenyletherdicarbonsäure, 2,6-Naphthalindicarbonsäure, 1,4-Naphthalindicarbonsäure sowie 1,5-Naphthalindicarbonsäure. Selbstverständlich können auch Mischungen derartiger Dicarbonsäuren eingesetzt werden. Vorzugsweise wird jedoch neben Terephthalsäure keine weitere aromatische Dicarbonsäure und/oder keine 1,4-Cyclohexandicarbonsäure eingesetzt. Genauso kann anspruchsgemäß optional ein Teil der wiederkehrenden Einheiten aus Hexamethylendiamin und linearer aliphatischer Dicarbonsäure durch ein Lactam bzw. eine ω-Aminocarbonsäure mit 6 bis 12 C-Atomen ersetzt werden. Die wiederkehrende Einheit aus Hexamethylendiamin und linearer aliphatischer Dicarbonsäure entspricht hierbei einer Einheit, die von einem Lactam bzw. einer ω-Aminocarbonsäure herrührt. Lactame bzw. ω-Aminocarbonsäuren mit 6 bis 12 C-Atomen sind beispielsweise Caprolactam, Capryllactam, Undecanolactam, ω-Aminoundecansäure, Laurinlactam sowie ω-Aminododecansäure. Hierbei sind Lactame bzw. ω-Aminocarbonsäuren mit 11 oder 12 C-Atomen bevorzugt. Vorzugsweise wird jedoch neben Hexamethylendiamin und linearer aliphatischer Dicarbonsäure kein Lactam bzw. keine ω-Aminocarbonsäure eingesetzt.

Die Zusammensetzung des teilaromatischen Copolyamids wird vorteilhafterweise so gewählt, dass sein Kristallitschmelzpunkt Tₘ gemäß ISO 11357, gemessen beim 2. Aufheizen, im Bereich von 220 bis 300 °C, vorzugsweise im Bereich von 230 bis 295 °C und besonders bevorzugt im Bereich von 240 bis 290 °C liegt. Wenn mehrere Schmelzpeaks auftreten, wird Tₘ aus dem Hauptschmelzpeak ermittelt.

Das Copolyamid wird in der Regel durch Schmelzepolykondensation hergestellt. Entsprechende Verfahren sind Stand der Technik. Alternativ kann auch jedes andere bekannte Polyamid-Syntheseverfahren verwendet werden.

Eine notwendigerweise äquimolare Kombination von Hexamethylendiamin und Terephthalsäure liegt dann vor, wenn gewährleistet ist, dass diese Monomeren im Molverhältnis 1 : 1 reagieren können. Hierbei kann berücksichtigt werden, dass Hexamethylendiamin relativ flüchtig ist und aus diesem Grunde während der Polykondensation Verluste auftreten können, die durch eine erhöhte Einwaage ausgeglichen werden müssen. Es kann darüber hinaus nötig sein, in geringem Umfang von der exakten Stöchiometrie abzuweichen, um ein bestimmtes Endgruppenverhältnis einzustellen. Gleiches gilt unter II.ß) für die notwendigerweise äquimolare Kombination aus Hexamethylendiamin und einer linearen aliphatischen Dicarbonsäure mit 8 bis 19 C-Atomen.

In einer bevorzugten Ausführungsform beträgt beim teilaromatischen Polyamid das Verhältnis der Aminoendgruppen zur Summe aus Amino- und Carboxylendgruppen 0,3 bis 0,7 und besonders bevorzugt 0,35 bis 0,65. Der Anteil der Aminoendgruppen kann durch Regelung der Polykondensation nach Methoden eingestellt werden, die dem Fachmann bekannt sind. Die Regelung kann beispielsweise durch Variation des Verhältnisses von eingesetztem Diamin zu eingesetzter Dicarbonsäure, durch Zusatz einer Monocarbonsäure oder durch Zusatz eines Monoamins erfolgen. Darüber hinaus kann der Anteil an Aminoendgruppen auch dadurch eingestellt werden, dass man zwei Copolyamide, von denen eines reich an Aminoendgruppen und das andere arm an Aminoendgruppen ist, als Granulat oder in der Schmelze mischt.

Der Aminogruppengehalt kann durch Titration einer Lösung des Copolyamids in m-Kresol mittels Perchlorsäure bestimmt werden. Die Bestimmung des Carboxylgruppengehalts kann durch Titration einer Lösung des Copolyamids in o-Kresol mittels KOH in Ethanol erfolgen. Diese Methoden sind dem Fachmann geläufig.

Der Schlagzähmodifier ist insbesondere ein olefinisches Copolymer, das Einheiten der folgenden Monomere enthält:
a) 20 bis 99,9 Gew.-% und vorzugsweise 30 bis 99,7 Gew.-% eines oder mehrerer α-Olefine mit 2 bis 12 C-Atomen,
b) 0 bis 50 Gew.-% einer oder mehrerer acrylischer Verbindungen, ausgewählt aus
   - Acrylsäure bzw. Methacrylsäure bzw. deren Salzen und
   - Estern von Acrylsäure bzw. Methacrylsäure mit einem C₁- bis C₁₂-Alkohol, wobei epoxidgruppenhaltige Ester wie Glycidylacrylat und Glycidylmethacrylat ausgenommen sind,
c) 0,1 bis 50 Gew.-% eines olefinisch ungesättigten Epoxids oder Dicarbonsäureanhydrids,
wobei die Gew.-%-Angaben sich auf das olefinische Copolymer beziehen und in der Summe maximal 100 betragen können. Es ist zu berücksichtigen, dass daneben Einheiten vorliegen können, die sich von weiteren Comonomeren herleiten, beispielsweise von Styrol oder einem unkonjugierten Dien.

Wenn die Komponente c) aus Einheiten besteht, die sich von einem ungesättigten Dicarbonsäureanhydrid herleiten, sind diese vorzugsweise zu 0,1 bis 8 Gew.-% und besonders bevorzugt zu 0,3 bis 5 Gew.-% vorhanden.

Wenn die Komponente c) aus Einheiten besteht, die sich von einem olefinisch ungesättigten Epoxid herleiten, enthält die acrylische Verbindung gemäß b) weder Acrylsäure noch Methacrylsäure.

In einer ersten Ausführungsform ist der Schlagzähmodifier ein olefinisches Copolymer, das folgende Monomereinheiten enthält:
- 35 bis 94,9 Gew.-%, vorzugsweise 40 bis 90 Gew.-% und besonders bevorzugt 45 bis 85 Gew.-% Monomereinheiten auf Basis von Ethen,
- 5 bis 65 Gew.-%, vorzugsweise 10 bis 60 Gew.-% und besonders bevorzugt 15 bis 55 Gew.-% Monomereinheiten auf Basis eines 1-Alkens mit 4 bis 8 C-Atomen,
- 0 bis 10 Gew.-% Monomereinheiten auf Basis eines anderen Olefins sowie
- 0,1 bis 2,5 Gew.-% Monomereinheiten auf Basis eines aliphatisch ungesättigten Dicarbonsäureanhydrids,
wobei die einzelnen Anteile so gewählt werden, dass die Summe dieser Gew.-%-Angaben 100 ergibt.

Beim olefinischen Copolymer kommen als 1-Alken mit 4 bis 8 C-Atomen folgende Verbindungen in Frage: 1-Buten, 1-Penten, 1-Hexen, 1-Hepten und 1-Octen. Selbstverständlich können sich die Monomereinheiten auf Basis eines 1-Alkens mit 4 bis 8 C-Atomen auch von Mischungen dieser Verbindungen herleiten.

Das andere Olefin, dessen Monomereinheiten im olefinischen Copolymer zu 0 bis 10 Gew.-% enthalten sein können, ist von der Art her nicht limitiert. Es kann beispielsweise ein unkonjugiertes Dien sein, ein Monoen wie Propen, 4-Methylpenten-1 oder Styrol oder eine Mischung hiervon.

In einer ersten Variante ist das andere Olefin, dessen Monomereinheiten im olefinischen Copolymer zu 0 bis 10 Gew.-% enthalten sein können, kein unkonjugiertes Dien.

In einer zweiten Variante ist dieses andere Olefin kein Styrol und/oder kein Propen.

In einer dritten Variante enthält das olefinische Copolymer nur Monomereinheiten, die sich von Ethen, einem 1-Alken mit 4 bis 8 C-Atomen und einem aliphatisch ungesättigten Dicarbonsäureanhydrid herleiten.

In einer vierten Variante ist das 1-Alken mit 4 bis 8 C-Atomen 1-Buten.

In einer fünften Variante ist das 1-Alken mit 4 bis 8 C-Atomen 1-Hexen.

In einer sechsten Variante ist das 1-Alken mit 4 bis 8 C-Atomen 1-Octen.

Diese Varianten können ohne Einschränkung miteinander kombiniert werden.

Das aliphatisch ungesättigte Dicarbonsäureanhydrid kann beispielsweise Maleinsäureanhydrid sein, jedoch sind auch andere entsprechende Verbindungen wie etwa Aconitsäureanhydrid, Citraconsäureanhydrid oder Itaconsäureanhydrid geeignet.

Das anspruchsgemäße olefinische Copolymer kann auf bekannte Weise hergestellt werden, wobei das aliphatisch ungesättigte Dicarbonsäureanhydrid oder eine Vorstufe hiervon, beispielsweise die entsprechende Säure oder ein Halbester, thermisch oder bevorzugt radikalisch mit einem vorgebildeten Copolymer umgesetzt wird. Das aliphatisch ungesättigte Dicarbonsäureanhydrid kann hierbei auch in Kombination mit anderen Monomeren umgesetzt werden, beispielweise mit Fumarsäuredibutylester oder Styrol. Anspruchsgemäße olefinische Copolymere sind in verschiedenen Typen kommerziell erhältlich.

In einer zweiten Ausführungsform ist der Schlagzähmodifier ein olefinisches Copolymer, das folgende Monomereinheiten enthält:
- 35 bis 94,9 Gew.-%, vorzugsweise 40 bis 90 Gew.-% und besonders bevorzugt 45 bis 85 Gew.-% Monomereinheiten auf Basis von Ethen,
- 5 bis 65 Gew.-%, vorzugsweise 10 bis 60 Gew.-% und besonders bevorzugt 15 bis 55 Gew.-% Monomereinheiten auf Basis von Propen,
- 0 bis 10 Gew.-% Monomereinheiten auf Basis eines anderen Olefins, beispielsweise eines unkonjugierten Diens sowie
- 0,1 bis 2,5 Gew.-% Monomereinheiten auf Basis eines aliphatisch ungesättigten Dicarbonsäureanhydrids,
wobei die einzelnen Anteile so gewählt werden, dass die Summe dieser Gew.-%-Angaben 100 ergibt.

In einer dritten Ausführungsform ist der Schlagzähmodifier ein hydriertes und säureanhydridmodifiziertes Blockcopolymer mit mindestens einem polyvinylaromatischen Block A und mindestens einem Polyolefinblock B. Die Blöcke können linear oder sternförmig angeordnet sein, beispielsweise als Strukturen der Art A-B, A-B-A, B-A-B, A-B-A-B, A-B-A-B-A, B-A-B-A-B, (A)B₃, (B)A₃, (A)(B-A)₃, (B)(A-B)₃ usw., wobei das zahlenmittlere Molekulargewicht dieser Blockcopolymere im Bereich von etwa 10.000 bis etwa 800.000 und vorzugsweise im Bereich von etwa 20.000 bis etwa 500.000 liegt. Der Anteil an vinylaromatischer Verbindung im Blockcopolymer beträgt vorzugsweise 10 bis 70 Gew.-% und besonders bevorzugt 10 bis 55 Gew.-%. Die kautschukartigen Polyolefinblöcke B enthalten beispielsweise Ethylen/Propylen-, Ethylen/Butylenoder Ethylen/Pentylen-Einheiten; sie werden erhalten durch die Polymerisation von konjugierten Dienen und insbesondere von Butadien, Isopren, 1,3-Pentadien, 2,3-Dimethylbutadien oder Mischungen hiervon sowie durch anschließende selektive Hydrierung. Hierbei werden mindestens 80 % der aliphatischen Doppelbindungen des Anteils an polymerisiertem Dien, vorzugsweise mindestens 90 % und besonders bevorzugt mindestens 94 % hydriert. Die zur Herstellung des polyvinylaromatischen Blocks eingesetzte vinylaromatische Verbindung ist üblicherweise Styrol; es kann aber auch beispielsweise α-Methylstyrol oder dergleichen eingesetzt werden. Das hydrierte Blockcopolymer enthält 0,1 bis 8 Gew.-% und vorzugsweise 0,3 bis 5 Gew.-% Bernsteinsäureanhydridgruppen, die durch Reaktion mit einer ungesättigten Dicarbonsäure oder deren Anhydrid wie Maleinsäureanhydrid, Citraconsäure, Itaconsäure oder dergleichen entweder vor oder vorzugsweise nach der Hydrierung eingeführt werden. Die Herstellung derartiger säureanhydridmodifizierter, hydrierter Vinylaromat/konjugiertes Dien-Blockcopolymere ist Stand der Technik; geeignete Typen sind kommerziell erhältlich, beispielsweise unter dem Handelsnamen Kraton^{®} FG1901X. Dies ist ein lineares Triblockcopolymer vom Typ SEBS (Styrol-Ethylen/Butylen-Styrol) mit einem Polystyrolanteil von 30 Gew.-% und einem Gehalt an Bernsteinsäureanhydridgruppen von 1,4-2 Gew.-%.

In einer vierten Ausführungsform ist der Schlagzähmodifier eine Mischung aus
- 5 bis 95 Gew.-% eines olefinischen Copolymers, das Einheiten der folgenden Monomere enthält:
   a) 20 bis 99,9 Gew.-% eines oder mehrerer α-Olefine mit 2 bis 12 C-Atomen,
   b) 0 bis 50 Gew.-% Ester der Acrylsäure oder Methacrylsäure mit einem C₁- bis C₁₂-Alkohol, wobei epoxidgruppenhaltige Ester ausgenommen sind, und
   c) 0,1 bis 50 Gew.-% eines olefinisch ungesättigten Epoxids,
      wobei die Gew.-%-Angaben sich auf das olefinische Copolymer beziehen und in der Summe maximal 100 betragen, und
- 95 bis 5 Gew.-% eines olefinischen Copolymers, das Einheiten der folgenden Monomere enthält:
   a) 42 bis 99,9 Gew.-% eines oder mehrerer α-Olefine mit 2 bis 12 C-Atomen,
   b) 0 bis 50 Gew.-% Ester der Acrylsäure oder Methacrylsäure mit einem C₁- bis C₁₂-Alkohol, wobei epoxidgruppenhaltige Ester ausgenommen sind, und
   c) 0,1 bis 8 Gew.-% eines olefinisch ungesättigten Dicarbonsäureanhydrids,
wobei die Gew.-%-Angaben sich auf das olefinische Copolymer beziehen und in der Summe maximal 100 betragen.

Das α-Olefin mit 2 bis 12 C-Atomen ist beispielweise ausgewählt aus Ethen, Propen, 1-Buten, 1-Penten, 4-Methylpent-1-en, 1-Hexen, 1-Hepten, 1-Octen, 1-Nonen, 1-Decen, 1-Undecen und 1-Dodecen, wobei Ethen bevorzugt ist.

Als Beispiele für Ester der Acrylsäure oder Methacrylsäure lassen sich insbesondere Methylacrylat, Ethylacrylat, n-Butylacrylat, Isobutylacrylat, 2-Ethylhexylacrylat, Methylmethacrylat, Ethylmethacrylat, n-Butylmethacrylat und 2-Ethylhexylmethacrylat nennen.

Beispiele für olefinisch ungesättigte Epoxide sind insbesondere Glycidylester und Glycidylether, wie Glycidylacrylat, Glycidylmethacrylat, Glycidylmaleat, Glycidylitaconat, Vinylglycidylether und Allylglycidylether.

Beispiele für olefinisch ungesättigte Dicarbonsäureanhydride sind Maleinsäureanhydrid, Itaconsäureanhydrid, Citraconsäureanhydrid, 2,3-Dimethylmaleinsäureanhydrid und (2.2.2)-Bicyclooct-5-en-2,3-dicarbonsäureanhydrid.

In einer fünften Ausführungsform ist der Schlagzähmodifier eine Mischung aus
- 70 bis 99 Gew.-% des Schlagzähmodifiers der ersten Ausführungsform und
- 1 bis 30 Gew.-% eines olefinischen Copolymers, das Einheiten der folgenden Monomere enthält:
   a) 20 bis 99,9 Gew.-% eines oder mehrerer α-Olefine mit 2 bis 12 C-Atomen,
   b) 0 bis 50 Gew.-% Ester der Acrylsäure oder Methacrylsäure mit einem C₁- bis C₁₂-Alkohol, wobei epoxidgruppenhaltige Ester ausgenommen sind, und
   c) 0,1 bis 50 Gew.-% eines olefinisch ungesättigten Epoxids,
wobei die Gew.-%-Angaben sich auf das olefinische Copolymer beziehen und in der Summe maximal 100 betragen.

Die Details des hier eingesetzten olefinischen Copolymers sind die gleichen wie bei der vierten Ausführungsform beschrieben.

In einer sechsten Ausführungsform ist der Schlagzähmodifier eine Mischung aus
- 70 bis 99 Gew.-% des Schlagzähmodifiers der zweiten Ausführungsform und
- 1 bis 30 Gew.-% eines olefinischen Copolymers, das Einheiten der folgenden Monomere enthält:
   a) 20 bis 99,9 Gew.-% eines oder mehrerer α-Olefine mit 2 bis 12 C-Atomen,
   b) 0 bis 50 Gew.-% Ester der Acrylsäure oder Methacrylsäure mit einem C₁- bis C₁₂-Alkohol, wobei epoxidgruppenhaltige Ester ausgenommen sind, und
   c) 0,1 bis 50 Gew.-% eines olefinisch ungesättigten Epoxids,
wobei die Gew.-%-Angaben sich auf das olefinische Copolymer beziehen und in der Summe maximal 100 betragen.

Die Details des hier eingesetzten Copolymers sind die gleichen wie bei der vierten Ausführungsform beschrieben.

In einer siebten Ausführungsform ist der Schlagzähmodifier eine Mischung aus
- 50 bis 99 Gew.-% des Schlagzähmodifiers der ersten Ausführungsform und
- 1 bis 50 Gew.-% des hydrierten und säureanhydridmodifizierten Blockcopolymers der dritten Ausführungsform.

In einer achten Ausführungsform ist der Schlagzähmodifier eine Mischung aus
- 50 bis 99 Gew.-% des Schlagzähmodifiers der zweiten Ausführungsform und
- 1 bis 50 Gew.-% des hydrierten und säureanhydridmodifizierten Blockcopolymers der dritten Ausführungsform.

Diese Ausführungsformen sind nur beispielhaft. Im Rahmen der Erfindung können auch andere, hier nicht genannte Schlagzähmodifier eingesetzt werden. Hierbei ist die erste Ausführungsform besonders bevorzugt, da derartige Formmassen eine besonders hohe Wärmealterungsbeständigkeit besitzen. Bevorzugt sind darüber hinaus auch die fünfte und die siebte Ausführungsform, die den Schlagzähmodifier der ersten Ausführungsform ebenfalls enthalten.

In einer bevorzugten Ausführungsform enthält die Formmasse der Schicht II keinen Schlagzähmodifier, und zwar insbesondere dann, wenn die Schicht II als Sperrschicht gegenüber einem zu fördernden Medium eingesetzt werden soll. In diesem Fall kann die Schicht II im Verbund beliebig plaziert werden.

Wenn die Schicht II hingegen als extraktarme Innenschicht eingesetzt werden soll, um die Auswaschung von störenden niedermolekularen Bestandteilen zu verringern, kann sie erhebliche Mengen an Schlagzähmodifier enthalten; dies wirkt sich vorteilhaft auf die mechanischen Eigenschaften aus. Eine eventuell benötigte Sperrwirkung kann in diesem Fall dadurch gewährleistet werden, dass der Verbund eine zusätzliche Sperrschicht enthält.

Die Formmasse der Schicht II kann ebenfalls weitere Komponenten enthalten wie z.B. Schlagzähmodifikatoren, andere Thermoplaste, Weichmacher und andere übliche Zusatzstoffe. Beispiele hierfür sind Pigmente bzw. Füllstoffe wie Ruß, Titandioxid, Zinksulfid, Schichtsilikate, Verarbeitungshilfsmittel wie Wachse, Zinkstearat oder Calciumstearat, Antioxidantien, UV-Stabilisatoren sowie Zusätze, die dem Produkt antielektrostatische Eigenschaften verleihen wie z. B. Kohlenstofffasern, Graphitfibrillen, Fasern aus rostfreiem Stahl bzw. Leitfähigkeitsruß. Der Zusatz aller dieser weiteren Komponenten ist für Polyamidformmassen Stand der Technik.

In einer bevorzugten Ausführungsform enthält die Formmasse der Schicht II 0 bis 10 Gew.-Teile Weichmacher, besonders bevorzugt 0 bis 8 Gew.-Teile, insbesondere bevorzugt 0 bis 6 Gew.-Teile, ganz besonders bevorzugt 0 bis 4 Gew.-Teile und höchstbevorzugt keinen Weichmacher.

Der erfindungsgemäße Mehrschichtverbund kann darüber hinaus weitere Schichten enthalten, beispielsweise eine weitere Schicht I, eine weitere Schicht II, eine Schicht aus einer Formmasse auf Basis eines thermoplastischen Polyesters, eine Schicht aus einer Formmasse auf Basis eines Fluorpolymers oder eine Schicht aus einer Formmasse auf Basis eines Ethylen-Vinylalkohol-Copolymers (EVOH).

Der erfindungsgemäße Mehrschichtverbund kann als flächiger Verbund vorliegen, beispielsweise als Platte oder als Folie, etwa als Verpackungsfolie, oder als Antiweartape bei flexiblen Rohren für die Offshore-Förderung.

In einer bevorzugten Ausführungsform ist der erfindungsgemäße Mehrschichtverbund ein Hohlkörper, in erster Linie ein Rohr oder ein Behälter. Darunter fallen beispielsweise Kraftstoffleitungen, Hydraulikleitungen, Bremsleitungen, Kupplungsleitungen oder Kühlflüssigkeitsleitungen, Bremsflüssigkeitsbehälter oder Kraftstoffbehälter. Weitere Anwendungen sind beispielsweise Liner für starre oder flexible Rohre in der Öl- oder Gasförderindustrie oder Leitungen von Umbilicals, in denen heiße Flüssigkeiten gefördert werden. Wenn die Innenschicht in Kontakt mit Ottokraftstoff oder Biodiesel steht, enthält sie vorzugsweise keinen Kupferstabilisator.

Bei der Verwendung des erfindungsgemäßen Mehrschichtverbundes zur Leitung oder Bevorratung von brennbaren Flüssigkeiten, Gasen oder Stäuben, wie z. B. Kraftstoff oder Kraftstoffdämpfen, empfiehlt es sich, eine der zum Verbund gehörenden Schichten oder eine zusätzliche Innenschicht elektrisch leitfähig auszurüsten. Dies kann durch Compoundieren mit einem elektrisch leitfähigen Zusatz nach allen Methoden des Standes der Technik geschehen. Als leitfähiger Zusatz können beispielsweise Leitruß, Metallflitter, Metallpulver, metallisierte Glaskugeln, metallisierte Glasfasern, Metallfasern (beispielsweise aus rostfreiem Stahl), metallisierte Whiskers, Kohlefasern (auch metallisiert), intrinsisch leitfähige Polymere oder Graphitfibrillen verwendet werden. Es können auch Mischungen verschiedener leitfähiger Zusätze eingesetzt werden.

Im bevorzugten Fall befindet sich die elektrisch leitfähige Schicht in direktem Kontakt mit dem zu führenden oder zu bevorratenden Medium und besitzt einen spezifischen Oberflächenwiderstand von maximal 10⁹ Ω/square. Die Messmethode zur Bestimmung des Widerstands von mehrschichtigen Rohren ist in der SAE J 2260 vom November 2004 erläutert.

Bei der Ausführung des erfindungsgemäßen Mehrschichtverbundes als Hohlkörper oder Hohlprofil (z. B. Rohr) kann dieser noch mit einer zusätzlichen Elastomerschicht ummantelt sein. Zur Ummantelung eignen sich sowohl vernetzende Kautschukmassen als auch thermoplastische Elastomere. Die Ummantelung kann sowohl mit als auch ohne Verwendung eines zusätzlichen Haftvermittlers auf den Mehrschichtverbund aufgebracht werden, beispielsweise mittels Extrusion über einen Querspritzkopf oder dadurch, dass ein vorgefertigter Elastomerschlauch über das fertig extrudierte Mehrschichtrohr geschoben wird. In der Regel besitzt die Ummantelung eine Dicke von 0,1 bis 4 mm und bevorzugt von 0,2 bis 3 mm.

Geeignete Elastomere sind beispielsweise Chloroprenkautschuk, Ethylen/Propylen-Kautschuk (EPM), Ethylen/Propylen/Dien-Kautschuk (EPDM), Epichlorhydrinkautschuk (ECO), chloriertes Polyethylen, Acrylatkautschuk, chlorsulfoniertes Polyethylen, Siliconkautschuk, Santopren, Polyetheresteramide oder Polyetheramide.

Die Fertigung des Mehrschichtverbundes kann ein- oder mehrstufig erfolgen, beispielsweise mittels einstufiger Verfahren auf dem Wege des Mehrkomponentenspritzgusses, der Coextrusion, des Coextrusionsblasformens (beispielsweise auch 3D-Blasformen, Schlauchextrusion in eine geöffnete Formhälfte, 3D-Schlauchmanipulation, Saugblasformen, 3D-Saugblasformen, sequentielles Blasformen) oder mittels mehrstufiger Verfahren, wie z. B. in der US 5 554 425 beschrieben.

In der nachfolgenden Tabelle werden beispielhaft mögliche Schichtenkonfigurationen genannt. Diese Beispiele sind nur zur Illustration gedacht und sollen keine Einschränkungen des Umfangs der Erfindung darstellen. Die genannten Schichtenkonfigurationen gelten generell unabhängig von der Geometrie, also auch für Folien. Sie gelten aber auch speziell für Hohlkörper wie Hohlprofile, beispielsweise Rohre, oder Behälter; in diesem Fall ist die Schicht gemäß a) die Außenschicht.

| **Konfiguration** | **Schichtenabfolge** |
|---|---|
| 1 | a) Schicht I |
| | b) Schicht II |
| 2 | a) Schicht I |
| | b) Schicht II |
| | c) Schicht I |
| 3 | a) Schicht I |
| | b) Schicht aus einer EVOH-Formmasse |
| | c) Schicht I |
| | d) Schicht II |
| 4 | a) Schicht I |
| | b) Schicht II |
| | c) Schicht I (elektrisch leitfähig ausgerüstet) |
| 5 | a) Schicht I |
| | b) Schicht II |
| | c) Schicht II (elektrisch leitfähig ausgerüstet) |
| 6 | a) Schicht I |
| | b) Schicht II |
| | c) Schicht aus einer haftend modifizierten Fluorpolymerformmasse |
| 7 | a) Schicht I |
| | b) Schicht II |
| | c) Schicht I |
| | d) Schicht I (elektrisch leitfähig ausgerüstet) |
| 8 | a) Elastomerschicht |
| | b) Schicht I |
| | c) Schicht II |
| | d) Schicht I |
| 9 | a) Elastomerschicht |
| | b) Schicht I |
| | c) Schicht II |
| | e) Schicht II (elektrisch leitfähig ausgerüstet) |

Bei der Herstellung der erfindungsgemäßen Verbunde durch Coextrusion ist die Haftung zwischen den Schichten I und II sehr gut, unabhängig davon, welches aliphatische Polyamid die Basis für die Schicht I bildet.

Die erfindungsgemäßen Verbunde weisen eine sehr gute Schlagfestigkeit und eine hohe Reißdehnung auf. Darüber hinaus hat sich gezeigt, dass aus dem Verbund nur eine sehr geringe Menge an Oligomeren ausgewaschen wird, wenn dieser über die Schicht II in Kontakt mit Kraftstoff steht; es treten somit keine Verstopfungen bei der Brennstoffzuführung zum Motor auf. Die Sperrwirkung erfindungsgemäßer Rohre gegenüber Kraftstoffkomponenten ist sehr gut.

Die Erfindung soll nachfolgend beispielhaft erläutert werden.

In den Beispielen wurden folgende Materialien eingesetzt:

| | |
|---|---|
| **VESTAMID^{®} LX9002 sw:** | eine schlagzähmodifizierte, weichgemachte PA12-Formmasse der Evonik Industries AG |
| **PA6T/612:** | siehe Herstellungsbeispiel 1 |
| **Calciumstearat:** | Verarbeitungshilfsmittel |
| **Naugard^{®} 445:** | Oxidationsstabilisator (aromatisches Amin) |

### Herstellungsbeispiel 1 (PA6T/612 50 : 50; erfindungsgemäß):

In einem Polykondensationskessel wurden 12,621 kg Hexamethylendiamin, 9,021 kg Terephthalsäure, 13,356 kg Dodecandisäure, 15,000 kg destilliertes Wasser und 3,53 g einer 50-gewichtsprozentigen wässrigen Lösung von hypophosphoriger Säure vorgelegt. Die Einsatzstoffe wurden bei 180 °C aufgeschmolzen und bei 225 °C/22 bar 3 Stunden gerührt. Unter kontinuierlicher Entspannung auf 10 bar wurde auf 300 °C aufgeheizt und bei dieser Temperatur weiter entspannt. Bei Erreichen von 0,5 bar wurde der Kessel entleert und das Produkt granuliert. Das Granulat wurde in einem Taumeltrockner nachkondensiert und so auf das gewünschte Molekulargewicht gebracht.

Kristallitschmelzpunkt Tₘ: 278 °C (Hauptpeak)

### Herstellung der Sperrschichtformmasse:

Eingesetzt wurden 91,08 Gew.-Teile des hergestellten PA6T/612, 0,6 Gew.-Teile Naugard 445 und 0,32 Gew.-Teile Calciumstearat. Die Formmasse wurde aus den einzelnen Bestandteilen durch Schmelzemischen in einem knetenden Aggregat hergestellt, als Strang ausgetragen, granuliert und getrocknet.

### Beispiel 1:

An einer Mehrschichtrohranlage der Firma Bellaform wurden Mehrschichtrohre mit jeweils einem Außendurchmesser von 8,0 mm und einer Gesamtwandstärke von 1,0 mm hergestellt, wobei die 0,75 mm dicke Außenschicht aus VESTAMID^{®} LX9002 sw und die 0,25 mm dicke Innenschicht aus der Sperrschichtformmasse bestand.

### Prüfungen:

a) Zugversuch: Die Mehrschichtrohre wurden in Anlehnung an DIN EN ISO 527-1 mit einer Abzugsgeschwindigkeit von 100 mm/min geprüft. Die Probekörper waren ca. 200 mm lang, die Einspannlänge betrug 100 mm und der Abstand der Dehnungsaufnehmer 50 mm.
b) Schlagbiegeversuch: Die Messung der Schlagzähigkeit der Mehrschichtrohre erfolgte nach DIN 73378 bei 23 °C. Hierfür wurden zehn ca. 100 mm lange Rohrabschnitte eingesetzt.
c) Fallhammertest: Der Fallhammertest wurde nach SAE-Spezifikation durchgeführt. Dabei wurde ein spezifisches Gewicht aus einer vorgeschriebenen Fallhöhe auf den Prüfkörper fallen gelassen. Über diese Prüfung wurde nach SAE J2260 das Schlagzähigkeitsverhalten der Mehrschichtrohre bei Stoßeinwirkung bestimmt. Es wurden zehn Probekörper bei -40 °C gemessen und nach der Beanspruchung erfolgte eine visuelle Überprüfung auf Beschädigung.
d) Trennversuch: Der Trennversuch wurde mit einer Zugprüfmaschine des Typs BZ 2.5/TN1 S der Firma Zwick durchgeführt, an der eine Zugvorrichtung und ein sich drehendes Metallrad befestigt sind, um die einzelnen Schichten der Probekörper voneinander trennen zu können. Über den Trennversuch in Anlehnung an DIN EN ISO 2411 wurde die Haftung zwischen zwei Schichten beurteilt, indem die Kraft gemessen wurde, die benötigt wird, um die beiden Schichten voneinander zu trennen. Hierfür wurden von den Mehrschichtrohren 20 cm lange Rohrabschnitte mit Hilfe einer Schneidevorrichtung längs gedrittelt.

Vor Beginn der Messung wurde mit Hilfe eines Messschiebers die Probenbreite mehrfach an unterschiedlichen Stellen gemessen und der Mittelwert in die Auswertesoftware eingetragen. Danach wurde das angetrennte Ende einer Schicht in eine Klemme eingespannt, die diese kontinuierlich in einem Winkel von 90° von der zweiten Schicht abzog.

Die Schichten wurden mit einer Prüfgeschwindigkeit von 50 mm/min voneinander abgezogen und parallel dazu wurde ein Diagramm der benötigten Kraft in Newton gegen den Weg in Millimetern aufgenommen. Aus diesem wurde der Trennwiderstand in N/mm ermittelt, der sich auf die Breite der haftenden Kontaktfläche bezieht.

Es wurden folgende Ergebnisse erhalten:
E-Modul: 546 MPa
Bruchspannung: 41,1 MPa
Bruchdehnung: 371 %
Schlagzähigkeit: 0 Brüche von 10
Fallhammertest: 0 Brüche von 10
Haftung zwischen Außenschicht und Innenschicht: 4,2 N/mm

### Oligomerauswaschbeständigkeit:

Über die Oligomerauswaschbeständigkeit wurde geprüft, wie viel Masse an löslichem und unlöslichem Extrakt pro Meter Rohr aus diesem durch einen Prüfkraftstoff ausgewaschen wird. Für die Prüfung wurde der alkoholhaltige Prüfkraftstoff FAM B (42,3 Vol.-% Toluol, 25,4 Vol.-% Isooctan, 4,3 Vol.-% Ethanol, 12,7 Vol.-% Diisobutylen, 15,0 Vol.-% Methanol und 0,5 Vol.-% VE-Wasser) in zwei Meter langen Rohrabschnitten für 72 Stunden bei 60 °C gelagert. Zur Probenvorbereitung wurde jeweils ein Ende der Rohre mit einem Metallball verschlossen. Die Probekörper wurden ca. zu 95 % mit dem Prüfkraftstoff befüllt und verschlossen und anschließend im Umluftofen bei 60 °C platziert. Nach Ablauf der Prüfzeit von 72 Stunden wurden die Rohre entnommen, auf Raumtemperatur abgekühlt und kurz geschüttelt, um eventuelle Rückstände an der Rohrinnenwand zu lösen. Die Prüfflüssigkeit wurde jeweils in ein Becherglas gefüllt, auf 0 °C gekühlt und bei dieser Temperatur weitere 24 Stunden gelagert. Der in der Prüfflüssigkeit enthaltene unlösliche Extrakt wurde über einen Polyethersulfon (PES)-Filter mit 0,045 µm Porengröße abgenutscht und ausgewogen. Das Filtrat wurde im Anschluss für 24 Stunden im Abzug abgedampft und der Rückstand ausgewogen. Es wurde jeweils eine Dreifachbestimmung durchgeführt.

Mit dem Rohr aus Beispiel 1 wurden 2,0 mg/m Rohr an unlöslichem Extrakt und 260 mg/m Rohr Rückstand nach Abdampfen des Filtrats erhalten.

Zum Vergleich: Ein Monorohr aus der PA12-Formmasse VESTAMID^{®} LX9002 ergab nach der gleichen Prozedur 16,0 mg/m Rohr an unlöslichem Extrakt und 851 mg/m Rohr Rückstand nach Abdampfen des Filtrats.

## Patentansprüche

1. Mehrschichtverbund, der folgende Schichten enthält:
I. Eine erste Schicht (Schicht I) aus einer Formmasse, die zu mindestens 40 Gew.-% ein aliphatisches Polyamid enthält, sowie
II. eine zweite Schicht (Schicht II) aus einer Formmasse, die zu mindestens 60 Gew.-% folgende Komponenten enthält:
1) 60 bis 100 Gew.-Teile eines teilaromatischen Copolyamids, das aus Monomereinheiten besteht, die sich herleiten von
α) 30 bis 90 Mol-% einer Kombination von Hexamethylendiamin und Terepthalsäure sowie
β) 70 bis 10 Mol-% einer Kombination von Hexamethylendiamin und einer linearen aliphatischen Dicarbonsäure mit 8 bis 19 C-Atomen;
wobei sich die Mol-%-Angaben auf die Summe von α) und β) beziehen und wobei maximal 20 % des Hexamethylendiamins durch die äquivalente Menge eines anderen Diamins ersetzt sein kann und/oder wobei maximal 20 % der Terephthalsäure durch die äquivalente Menge einer anderen aromatischen Dicarbonsäure und/oder 1,4-Cyclohexandicarbonsäure ersetzt sein kann und/oder wobei maximal 20 % der wiederkehrenden Einheiten aus Hexamethylendiamin und linearer aliphatischer Dicarbonsäure durch die äquivalente Menge von Einheiten ersetzt sein kann, die sich von einem Lactam beziehungsweise einer ω-Aminocarbonsäure mit 6 bis 12 C-Atomen herleiten,
2) 40 bis 0 Gew.-Teile eines olefinischen Copolymers als Schlagzähmodifier,
wobei die Summe der Gew.-Teile von 1) und 2) 100 ergibt.

2. Mehrschichtverbund gemäß Anspruch 1, **dadurch gekennzeichnet, dass** die Formmasse der Schicht I 0,01 bis 60 Gew.-% weitere Zusätze enthält.

3. Mehrschichtverbund gemäß einem der vorhergehenden Ansprüche, **dadurch gekennzeichnet, dass** die Formmasse der Schicht II 0,01 bis 40 Gew.-% weitere Zusätze enthält.

4. Mehrschichtverbund gemäß einem der vorhergehenden Ansprüche, **dadurch gekennzeichnet, dass** der Kristallitschmelzpunkt Tₘ des Copolyamids der Schicht I im Bereich von 220 °C bis 300 °C liegt, gemessen gemäß ISO 11357 beim 2. Aufheizen.

5. Mehrschichtverbund gemäß einem der vorhergehenden Ansprüche, **dadurch gekennzeichnet, dass** er eine oder mehrere weitere Schichten enthält.

6. Mehrschichtverbund gemäß Anspruch 5, **dadurch gekennzeichnet, dass** die weitere Schicht oder die weiteren Schichten ausgewählt sind aus
• einer weiteren Schicht I,
• einer weiteren Schicht II,
• einer Schicht aus einer Formmasse auf Basis eines thermoplastischen Polyesters,
• einer Schicht aus einer Formmasse auf Basis eines Fluorpolymers und
• einer Schicht aus einer EVOH-Formmasse.

7. Mehrschichtverbund gemäß einem der vorhergehenden Ansprüche, **dadurch gekennzeichnet, dass** er eine Folie, eine Platte oder ein Hohlkörper ist.

8. Mehrschichtverbund gemäß Anspruch 7, **dadurch gekennzeichnet, dass** der Hohlkörper ein Hohlprofil, insbesondere ein Rohr, oder ein Behälter ist.

9. Mehrschichtverbund gemäß Anspruch 8, **dadurch gekennzeichnet, dass** er eine oder mehrere weitere Schichten enthält, die ausgewählt sind aus einer elektrisch leitfähigen Schicht und einer Elastomerummantelung.

10. Mehrschichtverbund gemäß einem der Ansprüche 8 und 9, **dadurch gekennzeichnet, dass** er eine Kraftstoffleitung, eine Hydraulikleitung, eine Bremsleitung, eine Kupplungsleitung, eine Kühlflüssigkeitsleitung, ein Liner für starre oder flexible Rohre in der Öl- oder Gasförderindustrie oder eine Leitung eines Umbilicals ist.

11. Mehrschichtverbund gemäß einem der Ansprüche 8 und 9, **dadurch gekennzeichnet, dass** er ein Bremsflüssigkeitsbehälter oder ein Kraftstoffbehälter ist.
